Europäisches Patentamt

European Patent Office

Office européen des brevets

(19)

(11) **EP 1 008 561 A2**

(12) **EUROPEAN PATENT APPLICATION**

(43) Date of publication:
   **14.06.2000   Bulletin 2000/24**

(51) Int Cl.[7]: **C02F 9/00**

(21) Application number: **99309556.1**

(22) Date of filing: **29.11.1999**

(84) Designated Contracting States:
   **AT BE CH CY DE DK ES FI FR GB GR IE IT LI LU
   MC NL PT SE**
   Designated Extension States:
   **AL LT LV MK RO SI**

(30) Priority:   **08.12.1998   KR 9853566**

(71) Applicant: **KOREA RESEARCH INSTITUTE OF
   CHEMICAL TECHNOLOGY
   Daejeon 305-343 (KR)**

(72) Inventors:
   • **Ryu, Jeong Yong
      Daejeon, 305-345 (KR)**
   • **Ji, Kyoung Rak, Choogoong-Apt. 301-2001
      Chungchungbook-do, 361-201 (KR)**
   • **Song, Bong Keun
      Daejeon, 305-345 (KR)**
   • **Shin, Jong-Ho
      Daejeon, 305-345 (KR)**
   • **Ow, Say Kyuun
      Daejeon, 302-120 (KR)**

(74) Representative: **Jacob, Reuben Ellis
   Edward Evans & Co.,
   Clifford's Inn,
   Fetter Lane
   London EC4A 1BX (GB)**

(54)   **Calcium hardness reducing technology for recycled water of papermill**

(57)   The present invention relates to the method controlling calcium hardness of recycled paper-processing water, in particular, to calcium hardness reducing technology which controls the calcium hardness by precipitating calcium ion in process water into calcium carbonate through addition of sodium carbonate or sodium hydrogen carbonate to white water short-circulated in papermaking process, prevents previously the formation of calcium scale and fatty acid calcium salt according to recycling of process water by performing the flotation treatment method in removal of calcium carbonate precipitate and discharging calcium carbonate remaining after removal process of precipitate from papermaking system through retention in paper, improves the drainage property and the efficiency of polymer additives for paper manufacture by removing fine fractions in removal process of calcium carbonate, reduces environmental pollution from discharging of waste-water by closing the process water, and prevents outflow of additives for paper manufacture and fibers as raw material saving the energy thrown in process water and system.

**EP 1 008 561 A2**

**Description**

The present invention relates to calcium hardness reducing technology for recycled water of paper mill. More particularly, it relates to novel calcium hardness reducing technology which controls the calcium hardness by precipitating calcium ion in processing water into calcium carbonate through addition of sodium carbonate or sodium hydrogen carbonate to white water short-circulated in paper-manufacturing process. The invention helps prevent the formation of calcium scale and fatty acid calcium salt through recycling of processing water, and by performing a flotation treatment method in removal of calcium carbonate precipitate and discharging calcium carbonate remaining after removal process of precipitate from papermaking system through retention in paper. The invention also improves the dehydration property and the efficiency of polymer additives in paper manufacture by removing fine fractions in removal process of calcium carbonate, reduces environmental pollution from discharging of waste-water by closing the processing water, and prevents outflow of additives for paper manufacture and fibers as raw material saving energy in processing water and system.

It is one of drawbacks in paper industry that large amount of water consumption is required. The more production of paper is, the more amount of water is required and the more amount of wastewater is discharged. Even though large amount of wastewater is discharged from paper-manufacturing process, the legal requirements governing discharge of wastewater are low due to the low concentration of pollution materials. However, the standard reinforcing arrangement in chemical oxygen demand of waste-water as well as water scarcity and increase in water expense acts as a driving force to try to reduce the discharging amount of waste-water in all equipment for paper manufacture.

Accordingly, it is urgently required to reduce the amount of fresh water used and the amount of waste-water discharged by raising the recycling ratio of water in papermaking process, and actually research for a zero discharge system to recycle water of paper mill by 100 % has been intensively proceeding in advanced paper industry countries.

If zero discharge system is established by recycling water of paper mill, the following advantages can be obtained. Firstly, the environmental pollution from discharging of wastewater is reduced, secondly water of paper mill is saved, and thirdly the outflow of various additives and fiber as raw material for papermaking is prevented with saving energy. In addition, if amount of water is reduced without discharging of wastewater, delivery cost needed in demand and supply of raw materials is expected to be cut down by replacing the papermaking facilities to suburbs.

However, various problems occur due to the accumulation of contaminating material in performing the closing of processing water without discharging of wastewater. If suspended solid of processing water is accumulated, drainage of paper machine is reduced, pollution material increases, and papermaking clothes such as forming fabrics and felts are contaminated. Therefore, the life of paper machine clothes is shortened, the abrasion of paper machine is intensified, scale occurs, and the addition of polymer additives for paper manufacture must be increased in order to maintain paper property of the same level. Also, if the content of dissolved solid besides suspended solid increases, there are problems such as corrosion of paper machine, formation of pitch and various precipitates as well as bubbles in system, and bad smells produced by increase of slime and bacteria.

The improvement and optimization of the treatment system for process water from paper mills must be developed in order to overcome the problems encountered by the closing of processing water and to develop the advantages more and more.

In general, water treatment of paper-manufacturing process can be classified into three steps. The first step is to remove suspended solid in waste-water, the second step is to decompose organic dissolved solids remaining after the first step through chemical and biological treatment, and recently a third step is for removal of contaminating substance remaining after the second step for zero discharge of waste water has been introduced, and improvement of techniques for water treatment based on various principles is continuously being researched. [*Water Use Reduction in the Pulp and Peper Industry, 1994, 52*].

Presently, zero discharge system of paper-processing water is mainly attempted for manufacturing of linerboard and corrugated medium which is little affected by operating condition and product quality in closing of water, and advanced paper mills have ever applied the perfectly closed process [*Pulp and Paper Europe (7), 8 (1997)*].

There have been attempts to raise the recycling ratio of processing water through research for treatment for suspended solid and organic dissolved solid and to accomplish a zero discharge system for papermaking process through perfect closing. However, research for a treatment method for inorganic dissolved solid remains in its early stages up to now. The suspended solid or organic dissolved solid can be controlled by filtering through flotation and precipitate treatment and decomposing biologically. However, inorganic dissolved solid which consists of various metal ions does not have a suitable treatment method, except for a method using a metal ion chelating agent up to now. However, metal ion chelating agent is unsuitable for the control of inorganic dissolved solid for a perfectly closed zero discharge system because its activity disappears after constant time and inorganic ion is not chelated forever.

In general, inorganic dissolved solid is mainly introduced in process water through raw material and fresh water. Especially, in case of old corrugated container (OCC) recycling process using low-quality. mixed wastepaper as raw material, the accumulation of calcium ion of processing water is severe because calcium carbonate contained as filler and coating pigment are much flowed in with wastepaper.

The inorganic dissolved solid accumulated in paper-processing water is largely classified into Ti, Si, Fe, Al which have large ion size and low electric charge density and Na, Ca, Mg, K which are easily hydrated due to small ion size and high electric charge density. The inorganic dissolved solid of large ion size is not accumulated in large quantities because it is discharged with paper through excellent affinity to cellulose fiber in spite of high recycling ratio of processing water. However, inorganic dissolved solid of small ion size is accumulated in processing water more than 160 times in 100 % recycling of processing water than in unrecycled case [*Tappi Journal* 60 (12) 117 (1997)].

Especially, calcium ion forms more than half of all inorganic dissolved solids and contaminates the paper machine through formation of various scales and fatty acid calcium salts. In addition, it reduces the efficiency of additives because it adsorbs on the cellulose fiber surface competitively with polymer additives added for retention, accelerated drainage, and improvement of paper strength [*Nordic Pulp Paper Res. J.* (2), 258 (1993)].

The pollution of equipment for paper manufacture by calcium scale and fatty acid calcium salt becomes severe as the recycling ratio of processing water increases and occurs variously in all piping of the paper-manufacturing plant and process, papermaking equipment such as various stoppage equipment, pump, forming blade, suction box, couch roll, suction roll, and paper machine clothes such as forming fabric and press felt. Considerable maintenance expense of equipment is required in order to repair and replace contaminated equipment and instrument, and productivity of the latest high speed paper machine is remarkably reduced due to down time needed in repairing and replacement. For example, it is reported that linerboard paper company in U. S. A. suffers a loss of 156.000 000 dollars a year due to reduction of productivity through said down time [*Progress in Paper Recycling*, 6, 11, 70 (1996)].

In addition, where polymer additive of low electric charge density is added to pulp stock with high calcium hardness, the amount of additive must be elevated or positive ionic polymer electrolyte with high electric charge density must be applied because its efficiency is rapidly reduced according to low retention of additives. Especially, if chemicals added in excess under zero discharge system remains in processing water without being retained in paper, the pollution of closed processing water is promoted more and more.

Therefore, a technique for controlling hardness of inorganic dissolved solid, especially calcium, which complements the previous treatment techniques of suspended solid and organic dissolving solid must be necessarily established in order to construct a zero discharge system by raising the recycling ratio of processing water in the paper-manufacturing process. In particular, the application of these treatment techniques to linerboard manufacturing processes is urgently required.

The inventors have made much effort in order to construct a zero discharge system by raising the recycling ratio of process water in paper mills. The inventors have completed the present invention by developing the removal method of calcium ion from processing water in which calcium ion is precipitated into calcium carbonate through addition of sodium carbonate or sodium hydrogen carbonate to silo white water, as the method for controlling the calcium hardness of processing water in industrial papermaking process.

Therefore, an objective of the present invention is to provide a method for controlling calcium hardness, which prevents the formation of calcium scale and fatty acid calcium salt, through recycling of processing water, improves the drainage and the efficiency of polymer additives for paper manufacture by removing fine fractions, reduces environmental pollution through discharging of waste-water by closing the processing water, and prevents outflow of additives from paper manufacture and fibers as raw material saving energy in processing water and system.

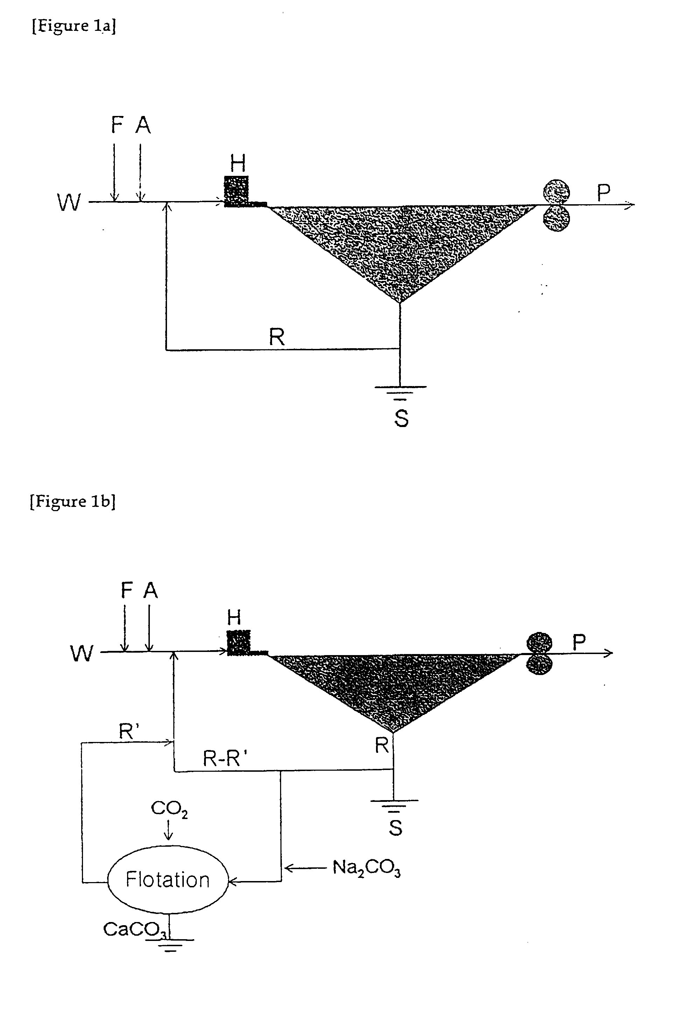

Figure la is a schematic diagram showing material balance of paper-processing water according to previous method, and figure 1b is a schematic diagram showing material balance of paper-processing water treated with calcium carbonate precipitate and flotation in order to reduce calcium hardness according to present invention.

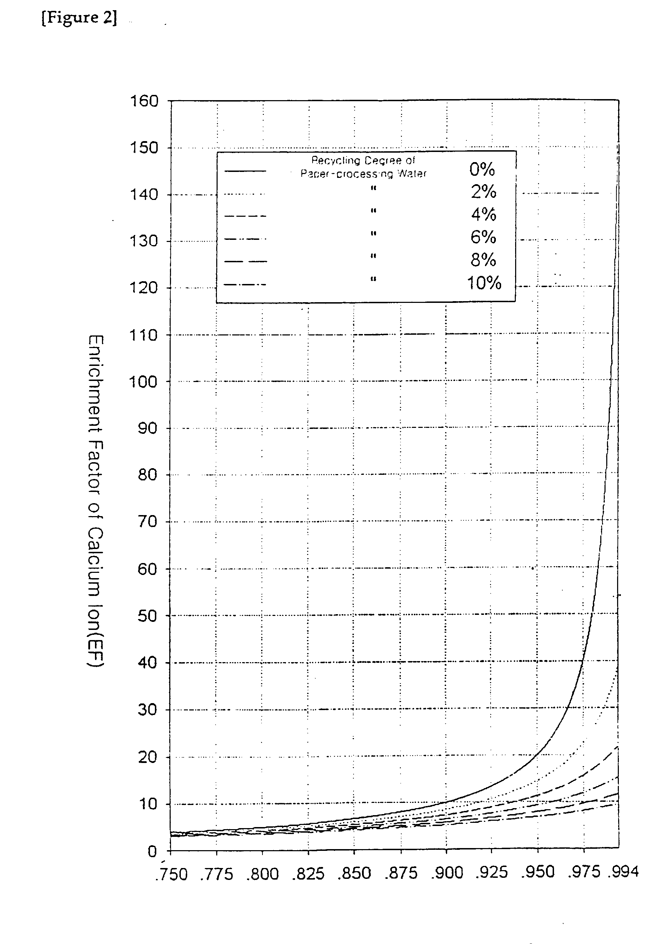

Figure 2 is a graph showing the change in enrichment factor of calcium ion of processing water according to recycling degree of paper-processing water and degree of calcium carbonate precipitate and flotation treatment.

[Description of symbol for primary part in figure]

W : Flow volume flowed in with paper composition
R : Recycled white water
F : Fresh water volume introduced to the papermaking system directly as sealing water of fan pump or high-pressure cleansing water
A : Water for dilution and dissolution of additive for paper manufacture
H: Flow volume ejected through head box
P : Flow volume flowed in drying part contained in wet web
S : Flow volume flowed out papermaking system

In the method for controlling calcium hardness of paper-processing water the present invention is summarised by forming calcium carbonate precipitate by adding sodium carbonate or sodium hydrogen carbonate to short-circulated white water and removing it.

In more detail, the present invention is as follows.

The present invention has established a treatment technique to remove calcium carbonate as reject, which is applied to deinking of printed wastepaper, to processing water treatment paying attention to the fact that hydrophobic calcium carbonate precipitate is adsorbed on fine fractions after precipitating calcium ion contained in short-circulated silo white water into calcium carbonate.

In the previous method, metal ion chelating agent is added for treatment of inorganic ion in processing water. The present invention has a considerable difference to previous method, in that calcium carbonate precipitate is formed using sodium carbonate or sodium hydrogen carbonate which easily forms precipitate with calcium ion without affecting the formation of scale at all, and the formed precipitate is removed from processing water.

The present invention uses sodium carbonate or sodium hydrogen carbonate in order to precipitate the calcium ion. Compared with other negative ions such as sulfuric acid ion ($SO_4{}^{2-}$), carbonate ion ($CO_3{}^{2-}$) has the advantage that the precipitate is easily removed from processing water because carbonate ion forms precipitate with low solubility in water through reaction with calcium ion ($Ca^{2+}$), and growth of micro-organism for water treatment is unaffected. In addition, 2A metal ion in periodic table easily forms the scale, but in said invention although sodium ion ($Na^+$) which is substituted. for calcium ion ($Ca^{2+}$) remains in processing water, it does not form scale or fatty acid salt through reaction with other ions. The efficiency reduction of various additives becomes also small through substitution of sodium ion for calcium ion. Therefore, sodium carbonate or sodium hydrogen carbonate used for precipitate of calcium ion in said invention can be referred to optimal material.

In addition, the present invention may include methods for removing the formed calcium carbonate precipitate from the processing water.

The calcium carbonate precipitate can be easily removed by precipitate method using sedimentation chest in general use. The size of sedimentation chest can be properly selected according to amount of processing water and precipitate velocity of suspended solid. However, precipitate method requires the sedimentation chest of large volume and additionally treatment equipment for neutralizing after precipitating calcium carbonate by controlling pH of process water into alkaline state.

If flotation treatment method or dissolved air flotation treatment method is performed besides said sedimentation method, the precipitated calcium carbonate is removed according to injection of carbon dioxide instead of air. In addition, pH of process water is controlled at the same time, and fine fractions which remain in process water as obstacle against drainage are also removed. In flotation treatment, injection time and amount of carbon dioxide is flexibly controlled because floater consists of multi-section, but it is impossible to perform the said operation in dissolved air flotation treatment. Judging from said details, flotation treatment is the most suitable for precipitate and control of calcium carbonate in the light of treatment efficiency and equipment expense.

The flotation treatment process was previously applied to deinking treatment of printed matters, and the present invention is characterized in applying it in order to control the calcium hardness of paper-processing water. The flotation process in deinking process is performed in-order to separate the ink particle with surface chemical property different from fibers from the paper compositions. For flotation treatment, various deinking agents and surface active agent must be added to reduce rising ratio of wood fibers and to accelerate the desorption of ink particle and formation and stability of bubble. However, flotation treatment process in said invention has a fundamental difference to deinking process in that calcium ion adsorbed on fines fractions is removed by flotation treatment of short-circulated white water under low flow rate, concentration, and flow volume without addition of other chemical additives after adding sodium carbonate or sodium hydrogen carbonate. The superiority of present invention exists in this aspect.

In this invention, it is desirable to perform flotation treatment after injecting successively air and carbon dioxide of 5-20 L/min for 1-2 minute and 10-30 second, respectively, under concentration of paper-processing water of 0.1-0.2 %, temperature of 20-55 °C, and flow rate of 60-120 L/min. When flotation treatment process deviates the limited range of said concentration, temperature, flow rate, and flow volume, calcium carbonate is not removed quite as effectively because a great deal of calcium carbonate is again flowed in papermaking system, and is dissolved into calcium ion due to strong shear stress and acidity. The inflow of calcium carbonate is attributed to insufficient removal of fines fraction or scarcity of fines fraction on which calcium carbonate adsorbs.

The calcium hardness of processing water is lowered more than 85 % after said removal process of precipitate. A small amount of calcium carbonate precipitate remaining after flotation treatment can be discharged from papermaking system through retention in paper because recycled processing water is short-circulated.

As mentioned above, the method controlling calcium hardness in present invention consists of precipitate process of calcium carbonate and removal process of precipitate, and this can be explained by following reaction formula.

The following reaction formula 1 shows the process in which calcium ion is precipitated into calcium carbonate according to addition of sodium carbonate.

**Reaction formula 1**

$$2Ca^{2+} + 3Na_2CO_3 + 2H_2O \rightarrow Ca^{2+} + CaCO_3\downarrow + 6Na^+ + 2HCO_3^- + 2OH^-$$

According to said reaction formula 1, the hydroxyl group (OH) is formed according to addition of sodium carbonate, hydrogen ion concentration in processing water increases, and thus in present invention the processing water must be neutralized through injection of carbon dioxide gas. According to the following reaction formula, the carbonate ion is additionally formed by injection of carbon dioxide gas and the calcium ion is removed through precipitate of calcium carbonate.

**Reaction formula 2**

$$CO_2 \text{ (suspended gas)} + 2H_2O \rightarrow H_2CO_3 + H_2O \rightarrow HCO_3^- + H_3O^+$$

In addition, non-reacted carbon dioxide remains in processing water, electrical conductivity rises, and calcium carbonate scale occurs in combining with main flow of processing water. Therefore, in the present invention, the heat treatment of processing water is performed in order to evaporate residual carbon dioxide and to change pH into weak alkalinity. As a result, pH is controlled to about 7.0-7.5.

**Reaction formula 3**

$$Ca^{2+} + 6Na^+ + 2HCO_3^- + 2OH^- + HCO_3^- + H_3O^+$$

$$\rightarrow Ca^{2+} + 6Na^+ + 3HCO_3^- + OH^- + 2H_2O$$

$$\rightarrow Ca^{2+} + 6Na^+ + 2HCO_3^- + CO_3^{2-} + 2H_2O$$

$$\rightarrow CaCO_3\downarrow + 6Na^+ + 2HCO_3^- + 3H_2O$$

$$\rightarrow \text{Heat treatment}$$

$$\rightarrow 6Na^+ + 2OH^- + 2CO_2\uparrow$$

If inorganic acid such as sulfuric acid instead of carbon dioxide is added to processing water for control of pH, calcium carbonate precipitate is rapidly dissolved, calcium hardness increases, and inorganic salt is accumulated.
In application of precipitate process of calcium carbonate and removal process of precipitate, calcium hardness of processing water is effectively controlled without change in pH. In addition, drainage property in paper machine is improved by removing fines fraction, obstacle against dewatering, which remains in processing water and is continuously short-circulated through flotation treatment. The acidity of total processing water is prevented because alkaline processing water is mixed into main flow after precipitate process of calcium carbonate and removal process of precipitate. Especially, said calcium carbonate precipitate is rapidly dissolved in acidic condition due to weak crystalline structure. Therefore, calcium carbonate precipitate is removed initially by the early flotation treatment in which air is injected, and finally by neutralizing pH of processing water through injection of carbon dioxide.
On the other hand, it is desirable to apply the controlling method of calcium hardness to recycling process of industrial paper such as corrugated paper, kraft paper, and paper board in which the waste paper is used as raw material and recycling ratio of process water is high, especially to short-circulated white water. In case of short-circulated white water, calcium carbonate precipitate is floated and removed by adsorption on fine fractions contained in white water according to addition of sodium carbonate, and residual calcium carbonate-adsorbed fine fractions are discharged from papermaking system through retention in paper. However, when said treatment is performed in long-circulated process water, the content of fines fractions is heterogeneous, calcium carbonate remaining after flotation treatment is accumulated in paper machine, and the scale takes place. In addition, the method controlling calcium hardness in said invention shows a considerable difference in reduction effect of calcium hardness according to suspended solids content. For example, if the content of fine fraction is in excess, the equipment cost increases as treatment time of flotation becomes long. However, if the content of fine fraction is too small, the non-adsorbed calcium carbonate is formed due to scarcity of surface area needed in adsorption of calcium carbonate, and removal efficiency of calcium carbonate is reduced. Therefore, the present invention exhibits the most excellent reduction effect of calcium hardness when fiber concentration of processing water is 0.1-0.2 %.

As mentioned above, it is desirable to apply the controlling method of calcium hardness to recycling process of industrial paper such as corrugated container, kraft paper, and paper board in which the waste paper is used as raw material and recycling ratio of process water is high.

In addition, the method of present invention can improve the productivity of various industrial papers and the product quality such as strength because it controls the formation of calcium scale detrimental in recycling of processing water and improves the efficiency of additives. If the flotation treatment is performed in removal process of calcium carbonate, the productivity of papermaking is largely improved through removal of fine fraction which reduces the drainage property.

The present invention may be illustrated in more detail as following examples, but it is not limited by the examples.

**Example**

The short-circulated processing water with calcium hardness of 600 ppm and suspended solid of 2,160 ppm was extracted from silo of linerboard manufacturing spot. The sodium carbonate of 2,100 ppm was added without injection of air under temperature of 45 °C and flow rate of 110 L/min using E-type flotation cell (Voith GmbH, Germany). The calcium ion was precipitated into calcium carbonate by addition of sodium carbonate, the flotation treatment was performed for 2 minutes at air flow volume of 15 L/min, and the pH of processing water was neutralized by injecting carbon dioxide for 20 seconds. After flotation treatment, the temperature of flotation accept was raised to 60 °C in order to remove carbonate ion formed by injection of carbon dioxide.

**Comparison example**

The short-circulated processing water with calcium hardness of 600 ppm and suspended solid of 2,160 ppm was extracted from silo of linerboard manufacturing spot. The flotation treatment was performed for 2 minutes under temperature of 45 °C, flow rate of 30 L/min, and air flow volume of 15 L/ min using E-type flotation cell (Voith GmbH, Germany).

**Experimental example**

In said example and comparison example, reject amount in flotation of processing water, total amount of calcium carbonate removed in reject, and calcium hardness of flotation accept were measured in order to confirm the change in calcium hardness of processing water according to precipitate process of calcium carbonate and removal process of precipitate.

The amount of calcium carbonate removed by flotation reject was measured through the method in which lime component is calculated by burning the reject for 48 hours at 400 °C, and then loss in quantity is calculated by heating the reject for 6 hours at 700 °C. The results were summarized in Table 1.

Table 1:

| The flotation reject, the amount of removed calcium carbonate, and the comparison of calcium hardness | | | | | |
|---|---|---|---|---|---|
| Division | Amount of flotation reject % (g) | Amount of calcium carbonate removed (g) | Calcium hardness (ppm) | pH | |
| | | | | Before injection of $CO_2$ | After flotation treatment |
| Example | 8.60 (32.35) | 13.21 | 76 | 9.4 | 7.4 |
| Comparison example | 4.85 (12.51) | 1.42 | 560 | - | 6.7 |

As described in Table 1, when the sodium carbonate is added to processing water in recycling process of old corrugated container and calcium carbonate precipitated by flotation treatment is separated, much calcium carbonate is removed and calcium hardness of processing water is reduced more than 87 %.

In addition, when zero discharge system was established by closing of process water, the reduction effect of calcium hardness by precipitate process of calcium carbonate and removal process of precipitate can be predicted as follows.

The processing water can be largely classified into the flow volume flowed in papermaking system and the flow volume flowed out papermaking system in order to predict accumulation behavior of inorganic dissolved solid according to recycling of processing water. The material balance of paper-processing water is classified into four factors and three factors, respectively.

**Water volume entering papermaking system**

F = Clear water volume flowed in papermaking system directly as sealing water of fan pump or high-pressure cleansing water
A = Fresh water for dilution and dissolution of additive for paper manufacture
R = Recycled white water
W = Flow volume flowed in with paper composition

**Water volume leaving papermaking system**

P = Flow volume flowed in drying part contained in wet web
S = Flow volume flowed out papermaking system
R = Flow volume remaining in papermaking system as recycled white water

It is assumed that the sum of flow volume flowed in papermaking system and the sum of flow volume flowed out papermaking system are equal to total flow volume ejected through head box, and is constant. In addition, recycling ratio of processing water and calcium ion concentration at constant recycling ratio can be defined as follows.

H = Constant total flow volume as flow volume ejected through head box
r = Recycling ratio of processing water. Value of recycled flow volume divided by total flow volume (flow volume of head box). $r = R/H$
Y = Amount of calcium ion flowed in process through clear water or used paper $(y)_I$ = Calcium ion concentration of processing water in I part. Marking as $(y)_{I,r}$ in case of recycling ratio r.

According to said definition, total (head box) flow volume can be expressed as follows because it is equal to flow volume flowed in papermaking system or flow volume flowed out papermaking system.

$$H = F + R + W + A = P + S + R$$

The simple equality is formed by removing recycling flow volume R in both sides.

$$F + W + A = P + S$$

According to said equality, the sum of clear water volume flowed in papermaking system directly as sealing water of fan pump or high-pressure cleansing water (F), flow volume flowed in for dilution and dissolution of various additives (A), and flow volume flowed in with paper composition (W) is equal to the sum of flow volume flowed in drying part contained in wet web (P) and flow volume flowed out papermaking system (S). When papermaking system attains the equilibrium state, the calcium ion concentration is constant in all kinds of processing water because calcium ion does not have affinity to fiber or other solid components. In addition, amount of calcium ion can be expressed as follows because amount flowed in papermaking system is equal to amount flowed out papermaking system in equilibrium state.

$$(y)_{H,r} = (y)_{P,r} = (y)_{S,r} = (y)_{R,r}$$

$$\Upsilon = P(y)_{P,r} + S(y)_{S,r} = P(y)_{H,r} + S(y)_{H,r}$$

Therefore, calcium ion concentration of head box can be expressed using inflow amount of calcium ion, flow volume of head box, and recycling ratio or processing water. In the following mathematical formula 1, enrichment factor (EF) is defined as the ratio of calcium ion concentration in recycling the processing water by ratio r to calcium ion concentration in unrecycled case, and is expressed as follows.

$$(y)_{H,r} = \Upsilon/(P+S) = \Upsilon/(H-R) = \Upsilon/(H-Hr) = \Upsilon/H(1-r)$$

Equation 1

$$EFr = (y)_{H,r}/(y)_{H,r=0} = 1/(1-r)$$

$$(y)_{H,r} = [EFr][(y)_{Hr=0}]$$

In said mathematical formula 1, if recycling ratio of processing water is 50 %, i.e. r is 0.5, enrichment factor is 2. As r increases by 0.75, 0.95, and 0.994, EFr increases rapidly by 4, 20, and 160. The recycling ratio (r) of 0.994 means that all processing water is recycled except for water evaporated in drying part contained in compressed dampened paper. As shown in figure 2, enrichment factor of calcium ion increases in form of fractional function as recycling ratio of processing water increases. Therefore, calcium ion is concentrated more than 160 times in perfectly closed zero discharge system than in unrecycled case, and calcium hardness increases rapidly.

When part of recycled processing water is treated with calcium carbonate precipitate and flotation method in order to prevent rapid increase in enrichment factor of calcium hardness, amount of calcium ion flowed out papermaking system is expressed as follows according to figure 1b.

$$\Upsilon = P(y)_{P,r} + S(y)_{S,r} + R'(y)_{R,r} = P(y)_{H,r} + S(y)_{H,r} + R'(y)_{H,r}$$

If R', i.e. part of recycled processing water, is fixed at 10 % of total recycled processing water, R' is 0.1R. Therefore, calcium ion concentration of head box and enrichment factor is expressed as following mathematical formula 2.

$$(y)_{I,r} = \Upsilon/(P+S+0.1R) = \Upsilon/(H-0.9R) = \Upsilon/(H-0.9Hr) = \Upsilon/H(1-0.9r)$$

Equation 2

$$Efr = (y)_{H,r}/(y)_{H,r=0} = 1/(1-0.9r)$$

$$(y)_{I,r} = [EFr][(y)_{H,r=0}]$$

In said mathematical formula 2, if recycling ratio of processing water is 50 %, i.e. r is 0.5, enrichment factor is 1.8. As r increases by 0.75, 0.95, and 0.994, EFr increases gradually by 3, 6.9, and 9.5 compared with mathematical formula 1. Namely, the increase in enrichment factor of calcium ion is largely blunted in this case. When part of recycled white water is treated with calcium carbonate precipitate and flotation method as shown in figure 1b, calcium ion concentrated in processing water is remarkably reduced as shown in figure 2.

Especially, although only 2 % of total recycling water is treated with calcium carbonate precipitate and flotation method, enrichment factor of calcium ion in perfectly closed processing water is reduced to 1/4 of that in non-treated case.

As mentioned in detail above, the method controlling calcium hardness of paper-processing water according to present invention is perfectly different from transient treatment of metal ion chelating agent using previous chelating agent. Especially, this method is a new method designed to remove effectively calcium ion in closed zero discharge system, and is effective in solving the formation of scale and the efficiency reduction of polymer additive for paper manufacture according to increase of recycling ratio.

**Claims**

1. A method for controlling calcium hardness in paper-processing water, characterized in that calcium carbonate precipitate is formed by adding sodium carbonate or sodium hydrogen carbonate to short-circulated white water, and removing the calcium carbonate precipitate from paper-processing water.

2. A method according to claim 1, characterized in that said calcium carbonate precipitate is removed by flotation treatment method.

3. A method according to claim 2, characterized in that the flotation treatment is performed by injecting air and carbon dioxide successively under temperature of 20-55°C, flow rate of 60-120 L/min, and flow volume of 5-20 L/min.

4. A method according to claim 2 or claim 3, characterized in that pH of process water is controlled to 7.0-7.5 in said flotation treatment method.

5. A method according to any preceding claim, characterized in that a little calcium carbonate remaining after removal process of calcium carbonate is immediately discharged from drafting water system through retention in paper according to short-circulation of processing water.

[Figure 1a]

[Figure 1b]

[Figure 2]